# EUROPEAN PATENT APPLICATION

(11) **EP 2 712 126 A2**
(43) Date of publication of application: **26.03.2014**
(21) Application number: 11782942.4
(22) Date of filing: 18.05.2011
(51) Int. Cl.: H04L 12/46

(54) **NETWORKING METHOD, SERVER END DEVICE, CLIENT END DEVICE AND NETWORK SYSTEM**

(71) Applicant: Huawei Device Co., Ltd., Shenzhen, Guangdong 518129 (CN)
(72) Inventor: YANG, Bo, Shenzhen Guangdong 518129 (CN); XU, Zhongjie, Shenzhen Guangdong 518129 (CN); SHU, Long, Shenzhen Guangdong 518129 (CN)
(74) Representative: Isarpatent
(86) International application number: PCT/CN2011/074244
(87) International publication number: WO 2011/144025

(57) **Abstract**

Embodiments of the present invention provide a networking method, a server device, a client device, and a network system, relating to the communication field, for implementing easy interworking between the server device and the client device. The method includes: receiving, by a client device through a wireless router, a request message that is broadcast by a server device connected to the wireless router for requesting to display IP information of the client device, where the client device is connected to the wireless router; and displaying, by the client device, the IP information of the client device on a screen so that the server device is connected to the client device according to the IP information. The embodiments of the present invention are applicable to networking between the client device and the server device.

## Description

### FIELD OF THE INVENTION

The present invention relates to the communications field, and in particular, to a networking method, a server device, a client device, and a network system.

### BACKGROUND OF THE INVENTION

A digital home is an application, which, based on computer technologies and network technologies, allows various home appliances to communicate and exchange data with each other in different interconnection modes to implement "interworking" between the home appliances, and lets people obtain information more conveniently and quickly at home, so that comfortableness and amusement of people's residence are improved significantly.

In modern households, wireless connection-enabled terminal devices supporting photographing (such as a mobile phone, a digital photo frame, and a notebook computer) and interactive and networkable devices with an output display (such as a tablet computer, a set top box, an interactive Web television, and a notebook computer) are popularized to enrich and simplify people's life significantly. However, these two types of devices cannot interwork easily. For example, the content displayed on a mobile phone cannot be easily displayed on a television synchronously.

### SUMMARY OF THE INVENTION

Embodiments of the present invention provide a networking method, a server device, a client device, and a network system to implement easy interworking between the server device and the client device.

To achieve the above objectives, the embodiments of the present invention adopt the following technical solutions:

In one aspect, a networking method is provided, including:
receiving, by a client device through a wireless router, a request message that is broadcast by a server device connected to the wireless router for requesting to display IP information of the client device, where the client device is connected to the wireless router; and
displaying, by the client device, the IP information of the client device on a screen so that the server device is connected to the client device according to the IP information.

In one aspect, a networking method is provided, including:
broadcasting, by a server device, a request message through a wireless router to a client device connected to the wireless router for requesting to display IP information of the client device so that the client device displays the IP information of the client device on a screen; and
obtaining, by the server device, the IP information of the client device from the screen of the client device, and connecting to the client device according to the IP information.

In one aspect, a client device is provided, including:
a connecting unit, configured to connect to a wireless router;
a receiving unit, configured to receive, through the wireless router, a request message that is broadcast by a server device connected to the wireless router for requesting to display IP information of the client device; and
a displaying unit, configured to display the IP information of the client device on a screen so that the server device is connected to the client device according to the IP information.

In one aspect, a networking server device is provided, including:
a connecting unit, configured to connect to a wireless router;
a broadcasting unit, configured to broadcast a request message through the wireless router to a client device connected to the wireless router for requesting to display IP information of the client device;
an obtaining unit, configured to obtain IP information of the client device from a screen of the client device; and
a networking unit, configured to connect to the client device according to the IP information obtained by the obtaining unit.

In one aspect, a network system is provided, including:
a client device, configured to: receive, through the wireless router, a request message that is broadcast by a server device connected to the wireless router for requesting to display IP information of the client device, where the client device is connected to the wireless router; and display the IP information of the client device on a screen so that the server device is connected to the client device according to the IP information;
the server device, configured to: broadcast the request message through the wireless router to the client device connected to the wireless router for requesting to display IP information of the client device so that the client device displays the IP information of the client device on the screen; obtain the IP information of the client device from the screen of the client device, and connect to the client device according to the IP information; and
the wireless router, configured to connect with the client device and the server device in a wireless manner.

With the networking method, the server device, the client device, and the network system provided in the embodiments of the present invention, through a wireless router, the client device receives a request message that is broadcast by the server device connected to the wireless router for requesting to display IP information of the client device, and then displays the IP information of the client device on a screen so that the server device is connected to the client device according to the IP information. In this way, by using the IP information, the server device and the client device are connected easily without other relevant hardware and without requiring a user to set complicated parameters manually.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a schematic flowchart of a networking method according to Embodiment 1 of the present invention;
FIG. 2 is a schematic flowchart of a networking method according to Embodiment 2 of the present invention;
FIG. 3 is a schematic structural diagram of a client device according to Embodiment 4 of the present invention;
FIG. 4 is a schematic structural diagram of a server device according to Embodiment 5 of the present invention;
FIG. 5 is another schematic structural diagram of a server device according to Embodiment 5 of the present invention; and
FIG. 6 is a schematic structural diagram of a networking system according to Embodiment 6 of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiment of the present invention without creative efforts shall fall within the protection scope of the present invention.

### Embodiment 1

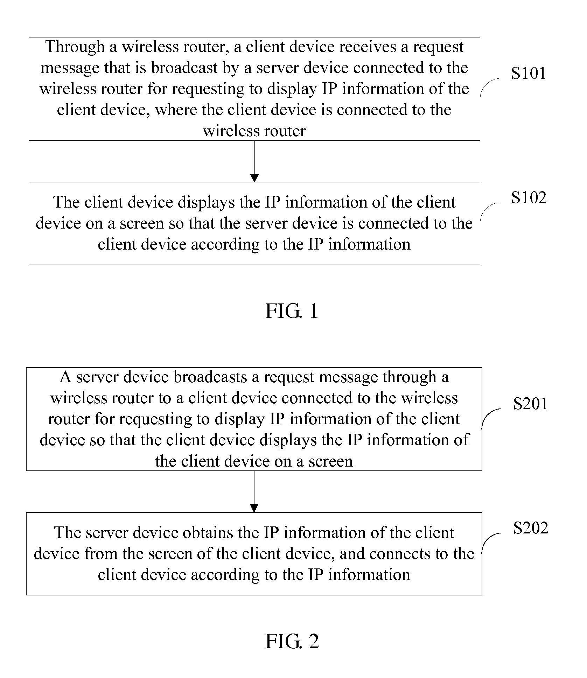

As shown in FIG. 1, a networking method provided in the embodiment of the present invention includes the following steps:

S101. Through a wireless router, a client device receives a request message that is broadcast by a server device connected to the wireless router for requesting to display IP information of a client device, where the client device is connected to the wireless router.

The client device may be an interactive and networkable device with an output display, for example, a tablet computer, a set top box, an interactive Web television, and a notebook computer; and the server device may be a terminal device that supports photographing and wireless connection, for example, a mobile phone, a digital photo frame, and a notebook computer.

S102. The client device displays the IP information of the client device on a screen so that the server device is connected to the client device according to the IP information.

Further, after the server device is connected to the client device according to the IP information, the client device receives, through the wireless router, data that is sent by the server device, and displays the data synchronously with the server device.

Displaying, by the client device on the screen, the IP information of the client device may be displaying an IP address displayed on the screen in a digital form directly, or displaying, on the screen, a two-dimensional code image that includes the IP information displayed.

With the networking method provided in the embodiment of the present invention, through a wireless router, the client device receives a request message that is broadcast by a server device connected to the wireless router for requesting to display IP information of the client device, and then displays the IP information of the client device on a screen so that the server device is connected to the client device according to the IP information. In this way, by using the IP information, the server device and the client device are connected easily without other relevant hardware and without requiring a user to set complicated parameters manually.

### Embodiment 2

As shown in FIG. 2, a networking method provided in the embodiment of the present invention includes the following steps:

S201. A server device broadcasts a request message through a wireless router to a client device connected to the wireless router for requesting to display IP information of the client device so that the client device displays the IP information of the client device on a screen.

The server device may be a terminal device that supports photographing and wireless connection, for example, a mobile phone, a digital photo frame, and a notebook computer. The client device may be an interactive and networkable device with an output display, for example, a tablet computer, a set top box, an interactive Web television, and a notebook computer.

S203. The server device obtains the IP information of the client device from the screen of the client device, and connects to the client device according to the IP information.

The manner in which the server device obtains the IP information of the client device from the screen of the client device may be: The user reads the IP address of the client device, which is displayed in a digital form, from the screen of the client device, and then inputs it into the server device; or the user activates a photographing function of the server device to photograph a two-dimensional code image that includes the IP information of the client device, which is displayed by the client device on the screen, and then the server device obtains the IP information of the client device from the image by using an image recognition technology.

Further, after the server device is connected to the client device according to the IP information, the server device sends data to the client device through the wireless router so that the client displays the data synchronously with the server device after receiving the data.

It should be noted that the displaying synchronously herein means that the client device displays data according to an agreement between the client and the server after the client device receives the data from the server for displaying, and the displaying of the data on the client and the displaying of the data on the server may have a delay that falls within a threshold.

With the networking method provided in the embodiment of the present invention, the server device broadcasts a request message through a wireless router to a client device connected to the wireless router for requesting to display IP information of the client device so that the client device displays the IP information of the client device on the screen; obtains the IP information of the client device from the screen of the client device, and is connected to the client device according to the IP information. In this way, by using the IP information, the server device and the client device are connected easily without other relevant hardware and without requiring a user to set complicated parameters manually.

### Embodiment 3

With the networking method provided in the embodiment of the present invention, a WiFi-enabled mobile phone (server device) is connected to a WiFi-enabled set top box (client device) through a WiFi-enabled router, and ultimately, a television TV connected to the set top box displays the content in the mobile phone synchronously.

It is assumed that two set top boxes, set top box 1 and set top box 2, are connected to TV-1 and TV2 through an HDMI (High Definition Multimedia Interface, high definition multimedia interface), respectively.

Step 1: A WiFi-enabled mobile phone connects to a WiFi-enabled wireless router.

Specifically, the user may activate a WiFi wireless network search function in the mobile phone. When the mobile phone searches out a wireless network, the user chooses to connect to the network so that the mobile phone is connected to the wireless router.

Step 2: WiFi-enabled set top box 1 and set top box 2 connect to the WiFi-enabled wireless router.

Also, the user may activate a wireless network search function in the WiFi-enabled set top box 1 and set top box 2. When set top box 1 and set top box 2 search out a wireless network, the user chooses to connect to the network so that the set top box 1 and set top box 2 are connected to the wireless router.

Step 3: The mobile phone broadcasts a request message to request IP information of the client terminal. The request message is broadcast to set top box 1 and set top box 2 through the router.

Because the mobile phone, set top box 1 and set top box 2 are all connected to the WiFi-enabled wireless router, the broadcast message sent by the mobile phone can be broadcast to the set top boxes through the router by using a relevant protocol supported by the wireless router, such as an RFB (Remote Frame Buffer, Remote Frame Buffer) protocol.

Step 4: After receiving the request message, set top box 1 enables the television TV-1 to display a two-dimensional code image that includes the IP information of set top box 1 on a screen. Also, after receiving the request message, set top box 2 enables the television TV-2 to display a two-dimensional code image that includes the IP information of set top box 2 on a screen. Herein, the IP information is displayed through a two-dimensional code image, but the IP address is not displayed in a digital form directly, which protects secrecy and prevents network connection failure caused by an incorrect input on the mobile phone.

Step 5: The user aims a camera of the mobile phone at the two-dimensional image that includes the IP information of set top box 1 on the screen of the television TV-1, and activates the photographing function to photograph the image. Image processing and recognition software in the mobile phone processes the image to obtain the IP address of set top box 1 that is included in the two-dimensional image.

Step 6: Because the WiFi-enabled mobile phone and the WiFi-enabled set top box 1 each are connected to the WiFi-enabled wireless router, the mobile phone can find set top box 1 through the wireless router according to the obtained IP address of set top box 1. After obtaining the IP address of set top box 1, the mobile phone sends a connection request to set top box 1, and implements networking between the mobile phone and set top box 1.

Step 7: After the mobile phone is connected to set top box 1, set top box 1 enables the television TV-1 to display "Synchronize?" on the screen. If the user selects "Yes" through a remote control, set top box 1 receives data from the mobile phone through the router, and displays the data synchronously with the mobile phone.

In this way, by operating the mobile phone, the user can display images, access the Internet, listen to music, watch movies, and so on, on the television TV-1.

Step 8: The user aims the camera of the mobile phone at the two-dimensional image that includes the IP information of set top box 2 on the screen of the television TV-2, and activates the photographing function to photograph the image. Image processing and recognition software in the mobile phone processes the image to obtain the IP address of set top box 2 that is included in the two-dimensional image.

Step 9: Because the WiFi-enabled mobile phone and the WiFi-enabled set top box 2 each are connected to the WiFi-enabled wireless router, the mobile phone can find set top box 2 through the wireless router according to the obtained IP address of set top box 2.

In the embodiment, two set top boxes that can be synchronized with the mobile phone are available. However, due to bandwidth limitation of the wireless network currently, it is preferred that only one set top box is synchronized with the mobile phone. Therefore, a switching operation is required. Of course, if the available bandwidth is not limited, the mobile phone may be synchronized with two set top boxes without switching.

Step 10: After obtaining the IP address of step top box 2, the mobile phone determines that a valid connection exists, and sends a connection switching indication message to set top box 2.

Step 11: After receiving, through the wireless router, the connection switching indication message that is sent by the mobile phone, set top box 2 enables the television TV-2 to display "Switch?" on the screen. If the user selects "Yes", the mobile terminal connects to set top box 2 according to the IP information of set top box 2. At this time, the mobile phone disconnects set top box 1, and the television TV-2 synchronously displays the functions that are active on the mobile terminal, such as displaying images, accessing the Internet, listening to music, and watching movies, and TV-1 recovers to a ready state automatically.

With the networking method provided in the embodiment of the present invention, in an aspect, a set top box is connected to a wireless router; through the wireless router, a request message for requesting to display IP information of the client device is received, where the request message is broadcast by a mobile phone connected to the wireless router; and then the IP information of the client device is displayed on a screen. In another aspect, the mobile phone is connected to the wireless router; through the wireless router, the request message for requesting to display the IP information of the client device is broadcast to the set top box connected to the wireless router; after the IP information is obtained from the screen of the set top box, the mobile phone is connected to the set top box according to the IP information. In this way, by using the IP information, the server device (mobile phone) and the client device (set top box) are connected easily without other relevant hardware and without requiring the user to set complicated parameters manually.

### Embodiment 4

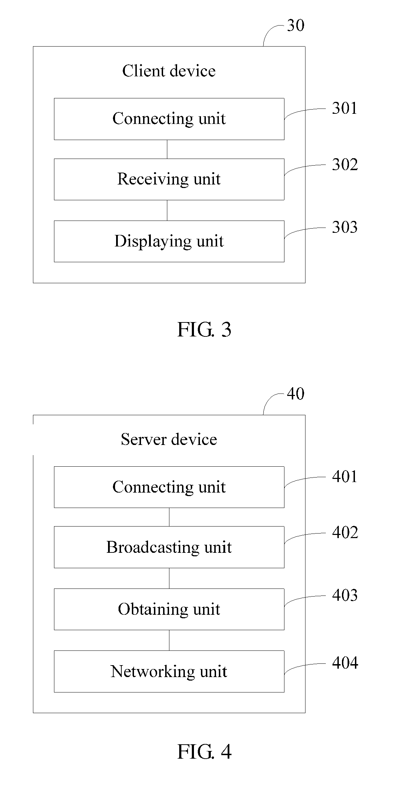

As shown in FIG. 3, a client device 30 provided in the embodiment of the present invention includes:
a connecting unit 301, configured to connect to a wireless router;
a receiving unit 302, configured to receive, through the wireless router, a request message that is broadcast by a server device connected to the wireless router for requesting to display IP information of the client device; and
a displaying unit 303, configured to display the IP information of the client device on a screen so that the server device connects to the client device according to the IP information.

With the networking client device provided in the embodiment of the present invention, after being connected to a wireless router, the client device receives a request message that is broadcast by a server device connected to the wireless router for requesting to display IP information of the client device, and then displays the IP information of the client device on a screen so that the server device is connected to the client device according to the IP information. In this way, by using the IP information, the server device and the client device are connected easily without other relevant hardware and without requiring a user to set complicated parameters manually.

Further, the receiving unit 302 is further configured to receive, through the wireless router, data that is sent by the server device after the client device is connected to the server device.

The displaying unit 303 is further configured to display the data synchronously with the server device after the receiving unit receives the data.

In this way, by operating the server device, the user can display images, access the Internet, listen to music, watch movies, and so on, on the client device, thereby enjoying better experience.

### Embodiment 5

As shown in FIG. 4, a server device 40 provided in the embodiment of the present invention includes:
a connecting unit 401, configured to connect to a wireless router;
a broadcasting unit 402, configured to broadcast a request message through the wireless router to a client device connected to the wireless router for requesting to display IP information of the client device;
an obtaining unit 403, configured to obtain IP information of the client device from a screen of the client device; and
a networking unit 404, configured to connect to the client device according to the IP information obtained by the obtaining unit 403.

With the networking server device provided in the embodiment of the present invention, after being connected to a wireless router, the server device broadcasts a request message through the wireless router to a client device connected to the wireless router for requesting to display IP information of the client device, obtains the IP information of the client device from a screen of the client device, and is connected to the client device according to the IP information. In this way, by using the IP information, the server device and the client device are connected easily without other relevant hardware and without requiring a user to set complicated parameters manually.

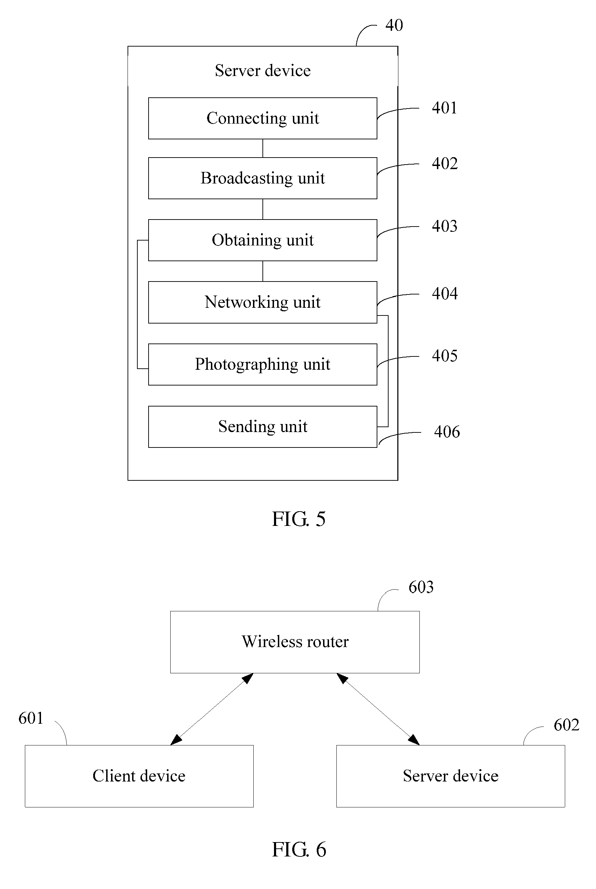

Further, as shown in FIG. 5, the server device 40 further includes:
a photographing unit 405, configured to photograph a two-dimensional code image that includes the IP information of the client device, where the image is displayed by the client device on the screen.

The obtaining unit 403 is specifically configured to obtain the IP information of the client device from the image by using an image recognition technology. The IP information is displayed through a two-dimensional code image, but the IP address is not displayed in a digital form directly, which protects secrecy and prevents network connection failure caused by an incorrect input on the mobile phone.

The server device 40 further includes:
a sending unit 406, configured to send data to the client device through the wireless router after being connected so that the client device displays the data synchronously after receiving the data.

In this way, by operating the server device, the user can display images, access the Internet, listen to music, watch movies, and so on, on the client device, thereby enjoying better experience.

### Embodiment 6

As shown in FIG. 6, a network system provided in the embodiment of the present invention includes a client device 601, a server device 602, and a wireless router 603.

The client device 601 is configured to: receive, through the wireless router 603, a request message that is broadcast by the server device 602 connected to the wireless router 603 for requesting to display IP information of the client device, where the client device 601 is connected to the wireless router 603; and display the IP information of the client device on a screen so that the server device 602 connects to the client device 601 according to the IP information.

Specifically, the client device 601 may be an interactive and networkable device with an output display, for example, a tablet computer, a set top box, an interactive Web television, and a notebook computer.

The server device 602 is configured to: broadcast the request message through the wireless router 603 to the client device 601 connected to the wireless router 603 for requesting to display IP information of the client device so that the client device 601 displays the IP information of the client device on the screen; obtain the IP information of the client device 601 from the screen of the client device 601, and connect to the client device 601 according to the IP information.

Specifically, the server device 602 may be a terminal device that supports photographing and wireless connection, for example, a mobile phone, a digital photo frame, and a notebook computer.

The wireless router 603 is configured to connect with the client device 601 and the server device 602 in a wireless manner.

The structure of the client device 601 and the structure of the server device 602 are the same as those in Embodiment 4 and Embodiment 5 above, and are not repeated herein.

With the networking system provided in the embodiment of the present invention, through a wireless router, a client device receives a request message that is broadcast by a server device connected to the wireless router for requesting to display IP information of the client device, and then displays the IP information of the client device on a screen. After obtaining the IP information from the screen of the client device, the server device is connected to the client device according to the IP information. In this way, by using the IP information, the server device and the client device are connected easily without other relevant hardware and without requiring a user to set complicated parameters manually.

Persons of ordinary skill in the art may understand that all or part of the steps of the methods in the embodiments may be implemented by a program instructing relevant hardware. The program may be stored in a computer readable storage medium. When the program is run, the foregoing steps of the methods in the embodiments are performed. The storage medium may be any medium capable of storing program codes, such as ROM, RAM, magnetic disk, or optical disk.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A networking method, comprising:
receiving, by a client device through a wireless router, a request message that is broadcast by a server device connected to the wireless router for requesting to display IP information of the client device, wherein the client device is connected to the wireless router; and
displaying, by the client device, the IP information of the client device on a screen so that the server device connects to the client device according to the IP information.

2. The networking method according to claim 1, wherein the displaying, by the client device, the IP information of the client device on a screen comprises:
displaying, by the client device, a two-dimensional code image that includes the IP information of the client device on the screen.

3. The networking method according to claim 1 or 2, wherein after the server device connects to the client device according to the IP information, the method further comprises:
receiving, by the client device through the wireless router, data that is sent by the server device, and
displaying the data synchronously with the server device.

4. A networking method, comprising:
broadcasting, by a server device, a request message through a wireless router to a client device connected to the wireless router for requesting to display IP information of the client device so that the client device displays the IP information of the client device on a screen; and
obtaining, by the server device, the IP information of the client device from the screen of the client device, and connecting to the client device according to the IP information.

5. The networking method according to claim 4, wherein the obtaining, by the server device, the IP information of the client device from the screen of the client device, comprises:
activating, by the server device, a photographing function to photograph a two-dimensional code image that includes the IP information of the client device, wherein the image is displayed by the client device on the screen, and obtaining the IP information of the client device from the image by using an image recognition technology.

6. The networking method according to claim 4 or 5, wherein after the server device is connected to the client device according to the IP information, the method further comprises:
sending, by the server device, data to the client device through the wireless router so that the client device displays the data synchronously with the server device after receiving the data.

7. A client device, comprising:
a connecting unit, configured to connect to a wireless router;
a receiving unit, configured to receive, through the wireless router, a request message that is broadcast by a server device connected to the wireless router for requesting to display IP information of the client device; and
a displaying unit, configured to display the IP information of the client device on a screen so that the server device connects to the client device according to the IP information.

8. The client device according to claim 7, wherein:
the receiving unit is further configured to receive, through the wireless router, data that is sent by the server device after the client device is connected to the server device; and
the displaying unit is further configured to display the data synchronously with the server device after the receiving unit receives the data.

9. A server device, comprising:
a connecting unit, configured to connect with a wireless router;
a broadcasting unit, configured to broadcast a request message through the wireless router to a client device connected with the wireless router for requesting to display IP information of the client device;
an obtaining unit, configured to obtain the IP information of the client device of the client device from a screen of the client device; and
a networking unit, configured to connect to the client device according to the IP information obtained by the obtaining unit.

10. The server device according to claim 9, further comprising:
a photographing unit, configured to photograph a two-dimensional code image that includes the IP information of the client device, wherein the image is displayed by the client device on the screen; wherein
the obtaining unit is specifically configured to obtain the IP information of the client device from the image by using an image recognition technology.

11. The server device according to claim 9 or 10, further comprising:
a sending unit, configured to send data to the client device through the wireless router after the server device is connected to the client device, so that the client device displays the data synchronously after receiving the data.

12. A network system, comprising:
a client device, configured to: receive, through the wireless router, a request message that is broadcast by a server device connected to the wireless router for requesting to display IP information of the client device, wherein the client device is connected to the wireless router; and display the IP information of the client device on a screen so that the server device is connected to the client device according to the IP information;
the server device, configured to: broadcast the request message through the wireless router to the client device connected to the wireless router for requesting to display IP information of the client device so that the client device displays the IP information of the client device on the screen; obtain the IP information of the client device from the screen of the client device, and connect to the client device according to the IP information; and
the wireless router, configured to connect with the client device and the server device in a wireless manner.
